# EUROPEAN PATENT APPLICATION

(11) **EP 1 630 779 A2**
(43) Date of publication of application: **01.03.2006**
(21) Application number: 05255176.9
(22) Date of filing: 23.08.2005
(51) Int. Cl.: G09G 3/34

(54) **Microelectromechanical system (MEMS) display device and method of addressing such a device**

(30) Priority: 27.08.2004 US 604896 P; 31.08.2004 US 606223 P; 27.09.2004 US 613458 P; 04.02.2005 US 51251
(71) Applicant: IDC, LLC, San Francisco, CA 94107 (US)
(72) Inventor: Chui, Clarence, San Mateo California 94402 (US); Mathew, Mithran C., Mountain View California 94043 (US); Mignard, Marc, San Jose California 95110 (US)
(74) Representative: Dunlop, Hugh Christopher

(57) **Abstract**

A system and method for addressing an array of MEMS display elements, such as interferometric modulators, from a drive control. A display includes groups of display elements that are addressed with a commonly applied drive signal. In one embodiment, the groups of display elements are configured to have different response times and are driven by pulses of varying length indicative of those response times. In another embodiment, the groups of display elements are configured to have different actuation voltages and are driven by pulses of varying voltage indicative of those actuation voltages.

## Description

### Background

### Field

The field of the invention relates to microelectromechanical systems (MEMS).

### Description of the Related Technology

Microelectromechanical systems (MEMS) include micro mechanical elements, actuators, and electronics. Micromechanical elements may be created using deposition, etching, and or other micromachining processes that etch away parts of substrates and/or deposited material layers or that add layers to form electrical and electromechanical devices. One type of MEMS device is called an interferometric modulator. An interferometric modulator may comprise a pair of conductive plates, one or both of which may be partially transparent and capable of relative motion upon application of an appropriate electrical signal. One plate may comprise a stationary layer deposited on a substrate, the other plate may comprise a metallic membrane suspended over the stationary layer. Such devices have a wide range of applications, and it would be beneficial in the art to utilize and/or modify the characteristics of these types of devices so that their features can be exploited in improving existing products and creating new products that have not yet been developed.

### Summary

The system, method, and devices of the invention each have several aspects, no single one of which is solely responsible for its desirable attributes. Without limiting the scope of this invention, its more prominent features will now be discussed briefly. After considering this discussion, and particularly after reading the section entitled "Detailed Description of Certain Embodiments" one will understand how the features of this invention provide advantages over other display devices.

In one embodiment, a display is provided. The display includes a plurality of light modulating elements at least some of which have different values of deflection versus one or both of addressing pulse width and addressing pulse voltage level. Also provided is addressing circuitry configured to provide addressing pulses of varying width and/or voltage level to the plurality of elements such that different combinations of elements switch in a selectable manner, depending upon the width and/or voltage level of the addressing pulses, and wherein the addressing circuitry is configured to provide a first pulse to which all elements of the plurality of elements are responsive and at least a second pulse to which less than all of the plurality of elements are responsive.

In another embodiment, a display is provide. The display includes a plurality of MEMS elements arranged in rows, wherein the MEMS elements of each of the rows are further arranged in subrows and wherein the subrows of each row are electrically connected. in this embodiment, a plurality of resistors are also provided, each of the resistors being connected to a respective one of the subrows, the respective one of the resistors for each of the subrows of each row having a different resistance from the resistors connected to the other subrows of the row.

In another embodiment, a method of addressing a plurality of display elements having at least a first and second display element and characterized by respective response thresholds includes generating a first pulse characterized by a parameter having a value greater than the response threshold of all of the plurality of display elements and applying the first pulse to the plurality of display elements. In addition, a second pulse is generated characterized by a parameter having a value greater than the response threshold of the first display element and less than the response threshold of the second display element. The second pulse is applied to the plurality of display elements.

In another embodiment, a driver circuit for addressing a plurality of display elements having at least a first and second display element and characterized by respective response thresholds includes means for generating a first pulse characterized by a parameter having a value greater than the response threshold of all of the plurality of elements and means for applying the first pulse to the plurality of display elements. The driver circuit also includes means for generating a second pulse characterized by a parameter having a value greater than the response threshold of the first display element and less than the response threshold of the second display element and means for applying the second pulse to the plurality of display elements.

Another embodiment includes a device. The device comprises a plurality of means for modulating light, the modulating means having differing values of deflection for a selected applied voltage. The display further comprises addressing means for providing addressing pulses of varying voltage level to the plurality of elements such that different combinations of the modulating means switch in a selectable manner, depending upon the voltage level of the addressing pulses. The addressing means is configured to provide a first pulse to which all modulating means of said plurality of elements are responsive and at least a second pulse to which less than all of said modulating means are responsive.

Another embodiment comprises a method of manufacturing a display. The display comprises providing a plurality of MEMS elements arranged in rows. The MEMS elements of each of the rows are further arranged in subrows. The subrows of each row are electrically connected. The method also comprises connecting a plurality of resistors to the MEMS elements. Each of the resistors connected to a respective one of the subrows. The respective one of the resistors for each of the subrows of each row each have a different resistance from the resistors connected to the other subrows of the row.

Another embodiment provides a display. The display comprises: a plurality of means for displaying arranged in rows, wherein the displaying means of each of the rows are further arranged in subrows and wherein the subrows of each row are electrically connected. The display also comprises a plurality of means for resisting electrical current, each of the resisting means connected to a respective one of the subrows, the respective one of the resisting means for each of the subrows of each row having a different resistance from the resisting means connected to the other subrows of the row.

### Brief Description of the Drawings

Figure 1 is an isometric perspective view depicting a portion of one embodiment of an interferometric modulator display in which a movable mirror of a first interferometric modulator is in a reflective, or "on," position at a predetermined distance from a fixed mirror and the movable mirror of a second interferometric modulator is in a non-reflective, or "off" position.
Figure 2 is a system block diagram illustrating one embodiment of an electronic device incorporating a 3x3 interferometric modulator display.
Figure 3 is a diagram of movable mirror position versus applied voltage for one exemplary embodiment of an interferometric modulator of Figure 1.
Figure 4 is an illustration of sets of row and column voltages that may be used to drive an interferometric modulator display.
Figure 5A illustrates one exemplary frame of display data in the 3x3 interferometric modulator display of Figure 2.
Figure 5B illustrates one exemplary timing diagram for row and column signals that may be used to write the frame of Figure 5A.
Figure 6A is a cross section of the device of Figure 1.
Figure 6B is a cross section of an alternative embodiment of an interferometric modulator.
Figure 6C is a cross section of an alternative embodiment of an interferometric modulator
Figure 7 is a partial schematic diagram of an embodiment of an interferometric modulator display in which the rows have been subdivided into four subrows that share a common driver connection.
Figure 8 is a timing diagram that illustrates a series of row and column signals applied to the top row of the embodiment of the array of Figure 7 to produce the illustrated display arrangement.
Figure 9 is a diagram, similar to that of Figure 3, of movable mirror position versus applied positive voltage illustrating an exemplary embodiment of pair interferometric modulators that have nested stability windows.
Figure 10 is a timing diagram that illustrates a series of row and column signals applied to the top row of the embodiment of the array of Figure 7 to produce the illustrated display arrangement.
Figure 11 is a flowchart illustrating one embodiment of a method of driving an interferometric modulator array such as described with respect to Figures 6 and 7.
Figures 12A and 12B are system block diagrams illustrating an embodiment of a visual display device comprising a plurality of interferometric modulators.

### Detailed Description of Preferred Embodiments

In preferred embodiments, the invention addresses a group of display elements with a drive signal applied through a common driver connection to the group of display elements. The display can thus produce more shades of gray, or color, with a smaller number of leads than would be necessary if drive signal for each display element were applied through separate leads for each display element.

The following detailed description is directed to certain specific embodiments of the invention. However, the invention can be embodied in a multitude of different ways. In this description, reference is made to the drawings wherein like parts are designated with like numerals throughout. As will be apparent from the following description, the invention may be implemented in any device that is configured to display an image, whether in motion (e.g., video) or stationary (e.g., still image), and whether textual or pictorial. More particularly, it is contemplated that the invention may be implemented in or associated with a variety of electronic devices such as, but not limited to, mobile telephones, wireless devices, personal data assistants (PDAs), hand-held or portable computers, GPS receivers/navigators, cameras, MP3 players, camcorders, game consoles, wrist watches, clocks, calculators, television monitors, flat panel displays, computer monitors, auto displays (e.g., odometer display, etc.), cockpit controls and/or displays, display of camera views (e.g., display of a rear view camera in a vehicle), electronic photographs, electronic billboards or signs, projectors, architectural structures (e.g., tile layouts), packaging, and aesthetic structures (e.g., display of images on a piece of jewelry). More generally, the invention may be implemented in electronic switching devices.

Spatial light modulators used for imaging applications come in many different forms. Transmissive liquid crystal display (LCD) modulators modulate light by controlling the twist and/or alignment of crystalline materials to block or pass light. Reflective spatial light modulators exploit various physical effects to control the amount of light reflected to the imaging surface. Examples of such reflective modulators include reflective LCDs, and digital micromirror devices.

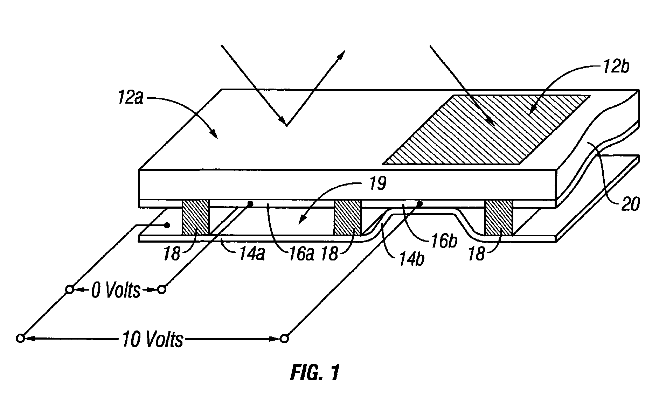

Another example of a spatial light modulator is an interferometric modulator that modulates light by interference. One interferometric modulator display embodiment comprising a reflective MEMS display element is illustrated in Figure 1. In these devices, the pixels are in either a bright or dark state. In the bright ("on" or "open") state, a bi-stable display element reflects incident light to a user. When in the dark ("off" or "closed") state, a bi-stable display element is light absorbing and reflects little light to the user. Depending on the embodiment, the display 110 may be configured to reflect light in the "off" state and absorb light in the "on" state, i.e., the light reflectance properties of the "on" and "off" states are reversed. MEMS pixels can also be configured to reflect only selected colors, producing a color display rather than black and white.

Figure 1 is an isometric perspective view depicting two adjacent pixels in a row of one embodiment of a visual display, comprising a MEMS interferometric modulator. An interferometric modulator display comprises a row/column array of these interferometric modulators. Each interferometric modulator includes a pair of mirrors positioned at a distance from each other to form a resonant optical cavity. In one embodiment, one of the mirrors may be moved between at least two positions. In the first position, the movable mirror is positioned at a first distance from the other mirror so that the interferometric modulator is predominantly reflective. In the second position, the movable mirror is positioned at a different distance, e.g., adjacent to the fixed mirror, such that the interferometric modulator is predominantly absorbing.

The depicted portion of the pixel array includes two adjacent interferometric modulators 12a and 12b in a row. In the depicted embodiment of the interferometric modulator, a movable mirror 14a is illustrated in the reflective ("released", "on", or "open") position at a predetermined distance from a fixed, partial mirror 16a, 16b. The movable mirror 14b of the interferometric modulator 12b is illustrated in the non-reflective, absorbent ("actuated", "off", or "closed") position adjacent to the partial mirror 16b.

The fixed mirrors 16a, 16b are electrically conductive, and may be fabricated, for example, by depositing layers of chromium and indium-tin-oxide onto a transparent substrate 18 that are patterned into parallel strips, and may form column electrodes. The movable mirrors 14a, 14b along the row may be formed as a series of parallel strips of a deposited metal layer or layers (orthogonal to the column electrodes 16a, 16b) on the substrate 18, with aluminum being one suitable material, and may form row electrodes.

When a potential difference is applied to a selected row and column, the capacitor formed at the intersection of the row and column electrodes at the corresponding pixel charges, and electrostatic forces pull the electrodes together. If the voltage is high enough, the movable electrode is forced against the stationary electrode (a dielectric material may be deposited on the stationary electrode to prevent shorting and control the separation distance) as illustrated by the pixel on the right in Figure 1. The behavior is the same regardless of the polarity of the applied potential difference. In this way, row/column actuation can control the reflective vs. absorbing state of each pixel.

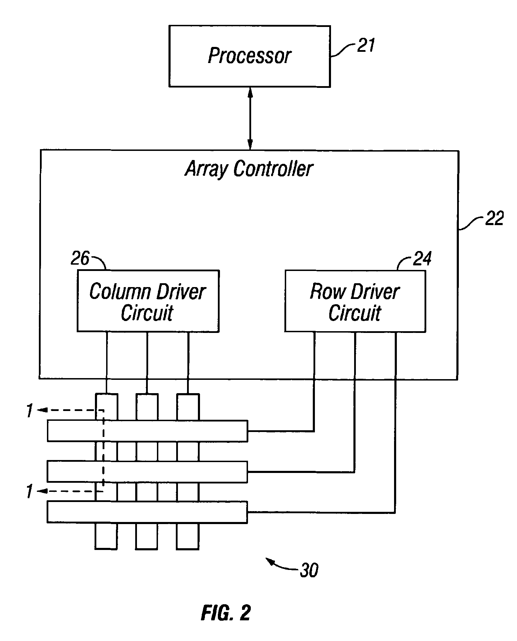

Figures 2 through 5B illustrate one exemplary process and system for using an array of interferometric modulators in a display application. Figure 2 is a system block diagram illustrating one embodiment of an electronic device that may incorporate aspects of the invention. In the exemplary embodiment, the electronic device includes a processor 20 which may be any general purpose single- or multi-chip microprocessor such as an ARM, Pentium®, Pentium II®, Pentium III®, Pentium IV®, Pentium® Pro, an 8051, a MIPS®, a Power PC®, an ALPHA®, or any special purpose microprocessor such as a digital signal processor, microcontroller, or a programmable gate array. As is conventional in the art, the processor 20 may be configured to execute one or more software modules. In addition to executing an operating system, the processor may be configured to execute one or more software applications, including a web browser, a telephone application, an email program, or any other software application.

In one embodiment, the processor 20 is also configured to communicate with an array controller 22. In one embodiment, the array controller 22 includes a row driver circuit 24 anda column driver circuit 26 that provide signals to the array 30. The cross section of the array illustrated in Figure 1 is shown by the lines 1-1 in Figure 2. Portions of the array controller 22 as well as additional circuitry and functionality may be provided by a graphics controller which is typically connected between the actual display drivers and a general purpose microprocessor. Exemplary embodiments of the graphics controller include 69030 or 69455 controllers from Chips and Technology, Inc., the S1D1300 series from Seiko Epson , and the Solomon Systech 1906.

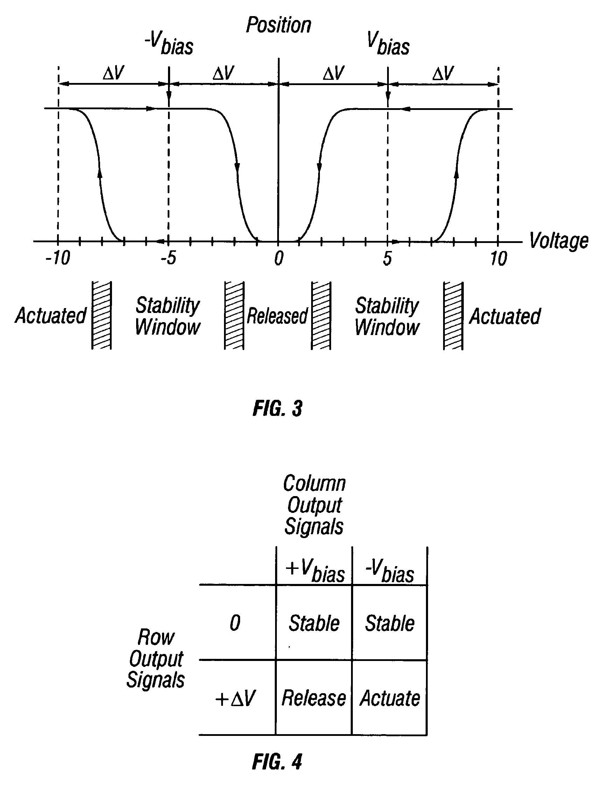

For MEMS interferometric modulators, the row/column actuation protocol may take advantage of a hysteresis property of these devices illustrated in Figure 3. It may require, for example, a 10 volt potential difference to cause a pixel to deform from the released state to the actuated state. However, when the voltage is reduced from that value, the pixel may not release until the voltage drops below 2 volts. There is thus a range of voltage, about 3 to 7 V in the example illustrated in Figure 3, where there exists a stability window within which the device will remain in whatever state it started in. The row/column actuation protocol is therefore designed such that during row strobing, pixels in the strobed row that are to be actuated are exposed to a voltage difference of about 10 volts, and pixels that are to be released are exposed to a voltage difference of close to zero volts. After the strobe, the pixels are exposed to a steady state voltage difference of about 5 volts such that they remain in whatever state the row strobe put them in. After being written, each pixel sees a potential difference within the "stability window" of 3-7 volts in this example. This feature makes the pixel design illustrated in Figure 1 stable under the same applied voltage conditions in either an actuated or released pre-existing state. Since each pixel of the interferometric modulator, whether in the actuated or released state, is essentially a capacitor formed by the fixed and moving mirrors, this stable state can be held at a voltage within the hysteresis window with almost no power dissipation. Essentially no current flows into the pixel if the mirror is not moving and the applied potential is fixed.

In typical applications, a display frame may be created by asserting the set of column electrodes in accordance with the desired set of actuated pixels in the first row. A row pulse is then applied to the row 1 electrode, actuating the pixels corresponding to the asserted column lines. The asserted set of column electrodes is then changed to correspond to the desired set of actuated pixels in the second row. A pulse is then applied to the row 2 electrode, asserting the appropriate pixels in row 2 in accordance with the asserted column electrodes. The row 1 pixels are unaffected by the row 2 pulse, and remain in the state they were set to during the row 1 pulse. This may be repeated for the entire series of rows in a sequential fashion to produce the frame. Generally, the frames are refreshed and/or updated with new display data by continually repeating this process at some desired number of frames per second. A wide variety of other protocols for driving row and column electrodes of pixel arrays to produce display frames are also well known and may be used in conjunction with the present invention.

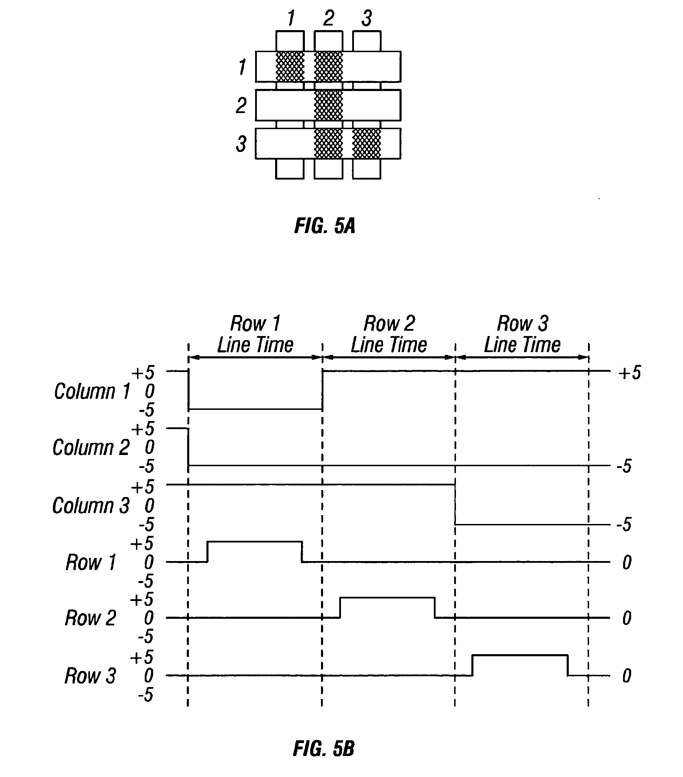

Figures 4, 5A, and 5B illustrate one possible actuation protocol for creating a display frame on the 3x3 array of Figure 2. Figure 4 illustrates a possible set of column and row voltage levels that may be used for pixels exhibiting the hysteresis curves of Figure 3. In the Figure 4 embodiment, actuating a pixel involves setting the appropriate column to -V_{bias}, and the appropriate row to +ΔV. Releasing the pixel is accomplished by setting the appropriate column to +V_{bias}, and the appropriate row to the same +ΔV. In those rows where the row voltage is held at zero volts, the pixels are stable in whatever state they were originally in, regardless of whether the column is at +V_{bias}, or -V_{bias}.

Figure 5B is a timing diagram showing a series of row and column signals applied to the 3x3 array of Figure 2 which will result in the display arrangement illustrated in Figure 5A, where actuated pixels are non-reflective. Prior to writing the frame illustrated in Figure 5A, the pixels can be in any state, and in this example, all the rows are at 0 volts, and all the columns are at +5 volts. In this state, all pixels are stable in their existing actuated or released states.

In the Figure 5A frame, pixels (1,1), (1,2), (2,2), (3,2) and (3,3) are actuated. To accomplish this, during a "line time" for row 1, columns 1 and 2 are set to-5 volts, and column 3 is set to +5 volts. This does not change the state of any pixels, because all the pixels remain in the 3-7 volt stability window. Row 1 is then strobed with a pulse that goes from 0, up to 5 volts, and back to zero. This actuates the (1,1) and (1,2) pixels and releases the (1,3) pixel. No other pixels in the array are affected. To set row 2 as desired, column 2 is set to -5 volts, and columns 1 and 3 are set to +5 volts. The same strobe applied to row 2 will then actuate pixel (2,2) and release pixels (2,1) and (2,3). Again, no other pixels of the array are affected. Row 3 is similarly set by setting columns 2 and 3 to -5 volts, and column 1 to +5 volts. The row 3 strobe sets the row 3 pixels as shown in Figure 5A.. After writing the frame, the row potentials are zero, and the column potentials can remain at either +5 or -5 volts, and the display is then stable in the arrangement of Figure 5A. It will be appreciated that the same procedure can be employed for arrays of dozens or hundreds of rows and columns. It will also be appreciated that the timing, sequence, and levels of voltages used to perform row and column actuation can be varied widely within the general principles outlined above, and the above example is exemplary only, and any actuation voltage method can be used with the present invention.

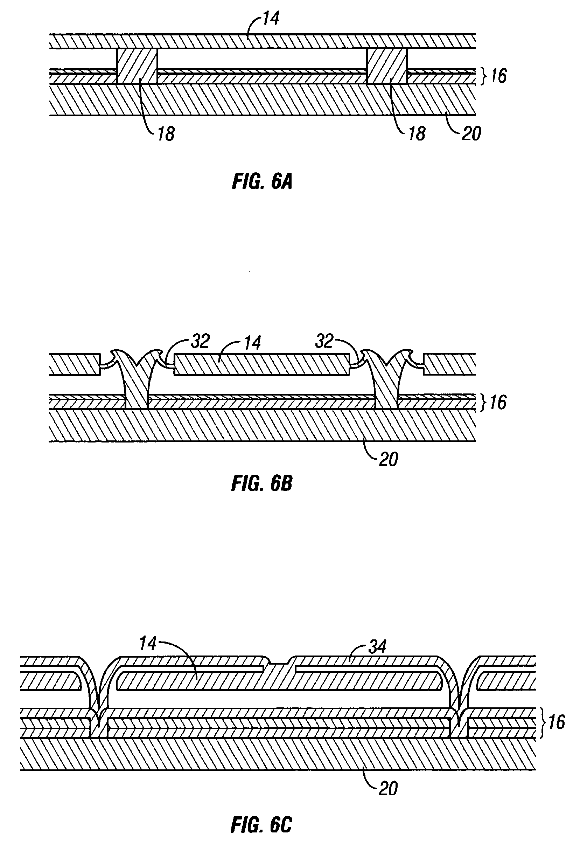

The details of the structure of interferometric modulators that operate in accordance with the principles set forth above may vary widely. For example, Figures 6A-6C illustrate three different embodiments of the moving mirror structure. Figure 6A is a cross section of the embodiment of Figure 1, where a strip of metal material 16 is deposited on orthogonally extending supports 18. In Figure 6B, the moveable mirror is attached to the supports at the corners only, on tethers 32. In Figure 6C, the mirror 16 is suspended from a deformable film 34. This embodiment has benefits because the structural design and materials used for the mirror 16 can be optimized with respect to the optical properties, and the structural design and materials used for the deformable layer 34 can be optimized with respect to desired mechanical properties. The production of various types of interferometric devices is described in a variety of published documents, including, for example, U.S. Published Application 2004/0051929, which is incorporated by reference in its entirety.

Data describing a monochrome display image may include one bit of data per pixel. One embodiment of a monochrome display includes one interferometric modulator per pixel, the on or off state of the modulator being set based on the value of the one bit of data per pixel. A greyscale image may include several bits of data per pixel. For example, a "3 bit" grayscale display includes 3 bits of data per pixel that correspond to one of eight shades of gray that may be assigned to each pixel. One embodiment of a display for displaying an exemplary 3 bit grayscale image includes three interferometric modulators for each pixel. To obtain the eight shades, the three modulators reflect light according to a ratio of 1:2:4. In one such embodiment, each of the interferometric modulators includes mirrors having a reflective surface area that varies according to the ratio of 1:2:4. A particular shade in a pixel is obtained in such an embodiment by setting each modulator to an on or off state based on the binary value of a corresponding bit of the 3 bits of data. One embodiment of a color display works similarly except that the color display includes a group of red, green, and blue interferometric modulators. For example, in a 12-bit color display, 4 of the 12 bits correspond to each of 16 intensities of red, green, and blue which are produced by red, green, or blue interferometric modulators. Such greyscale or color displays have more display elements to address than does a monochrome display. In order to address these display elements for such embodiments of gray or color displays, the number of electrical connections to the display control increases. For example, in one embodiment of a 3x3 3-bit grayscale display, each of the rows is subdivided into 3 subrows. Each pixel of such an embodiment of the display comprises the interferometric modulators of the three subrows. One such embodiment has 3* 3 =9 row driver connections and 3 column driver connections for a total of twelve driver connections rather than the 6 for a 3x3 monochrome display. One way of reducing the number of driver connections is to electrically connect together a group of modulators, for example, the 3 subrows in the 3 bit grayscale embodiment discussed above, and drive the group with a signal that changes the state of a subset of the electrically connected group.

For example, one way to selectively address a group of electrically connected interferometric modulators is to apply a drive signal in a pulse that is not of a sufficient duration to change the state of some of the group of modulators. Generally, the time period for a particular modulator in the display to change state in response to the leading edge of the row strobe may be referred to as a response time, τ. Note that the term "response time" may refer to either the time for an interferometric modulator to move from a reflective to non-reflective state or the time for the modulator to move from the non-reflective state to the reflective state. In one embodiment of the interferometric modulator display, the time period τ is conceptually the sum of an electrical response time, τ_{RC}, and a mechanical response time, τ_{M,}. With respect to the electrical response time, each of the interferometric modulators in the display is forms a respective circuit that may be characterized by a resistor-capacitor (RC) time constant. The electrical response time, τ_{RC}, is the time period from the leading edge of the row strobe pulse to the time that the circuit is charged to the actuation or release voltage across the mirrors. The mechanical response time, τ_{M,} is the time period for the movable mirror to physically change positions once the actuation or release voltage has been reached. The time for the modulator to move to a new position, τ_{M,} is dependent on factors such as a spring constant associated with the movable mirror of the modulator and the resistance to air of the mirror as it moves. One embodiment of the display includes groups of electrically connected modulators with different response times. By applying a common pulse to the group of modulators that is shorter than the response time of some of the modulators but longer than the response time of other of the modulators, the state of different combinations of the modulators can be set.

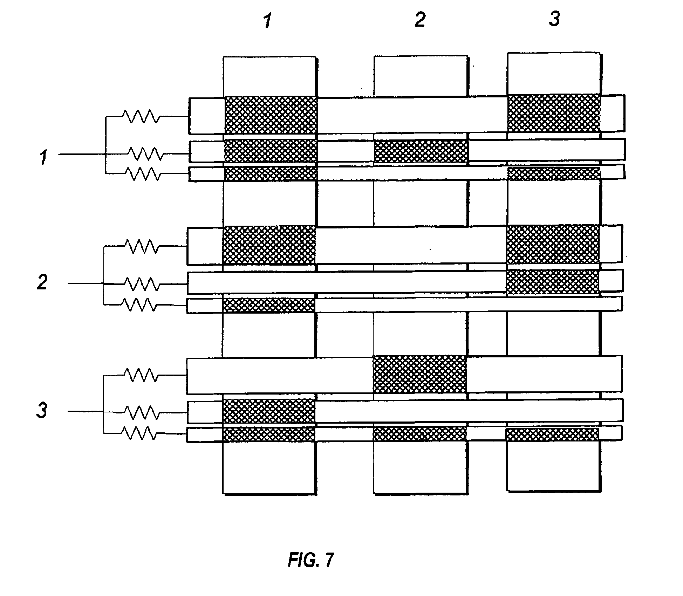

Figure 7 is a partial schematic diagram of an embodiment of an interferometric modulator display, similar to that shown in Figure 5A, in which the rows have been subdivided into four subrows that share a common driver connection. Each of the subrows defines one interferometric modulator at each column. As discussed above, if a row strobe is applied for a time that is less than the response time, the movable mirror of the interferometric modulator substantially maintains its position. In the embodiment of Figure 7, the interferometric modulators of the subrows are depicted from top to bottom with decreasing response times. In such an embodiment, the interferometric modulators of the subrows may be addressed via the common driver connection by suitably varying the duration of the row strobe so as to change the state of only a selected portion of the subrows.

The response times of an interferometric modulator is affected by the characteristic resistor-capacitor (RC) time of the driver circuit inclusive of the modulator, i.e., the time for the movable mirror of the modulator to be charged to a particular voltage, of the mechanical properties of the modulator, and of the resistance of the movable mirror to moving through air. In the embodiment depicted in Figure 7, the response times of the interferometric modulators along the subrows are varied by varying the RC time of the modulators in each subrow. More particularly, in Figure 7, each of the subrows is connected via a resistor that provides a progressively lower resistance for each subrow from top to bottom. When a voltage is applied between the mirrors of the modulators, those with the larger resistors take longer to charge, and thus take longer for the voltage difference to fall outside of the stability window for sufficient time for the movable mirror to actuate to a new position.

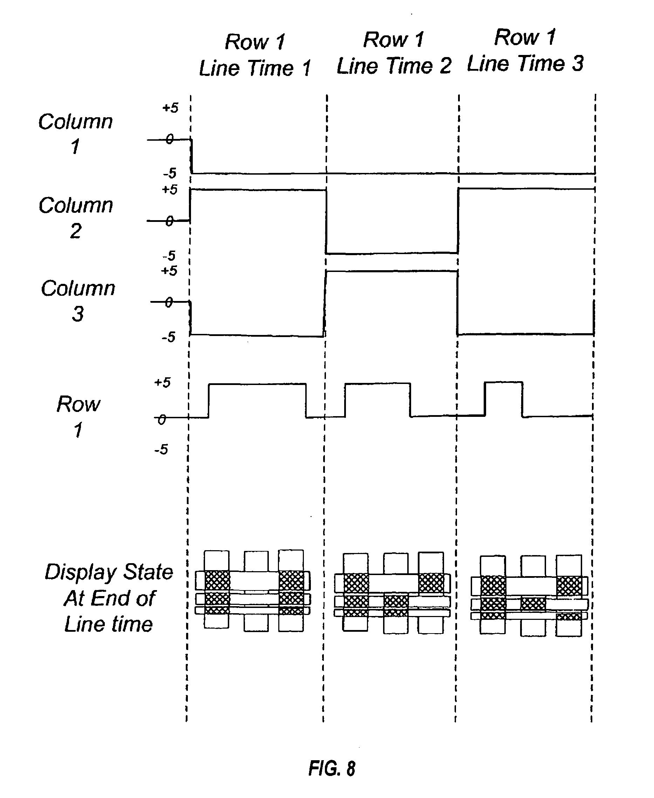

Figure 8 is a timing diagram that illustrates a series of row and column signals applied to the top row (Row 1) of the embodiment of the array of Figure 7 to produce the illustrated display arrangement. The row and column signals in one embodiment are similar to those depicted in Figure 5B, except that a series of pulses is applied for each row to address each of the subrows, with each of the pulses varying in duration. The reflective state of the display at the end of each line time is illustrated graphically on Figure 7 below each the pulses of each respective line time. The pulses are applied during a series of line times for each row, one line time for each subrow. The row pulses for each of these line times have magnitudes of +5 volts and a varying (decreasing from left to right) duration. The decreasing duration is selected so that the row pulses address only those modulators in subrows that have response times shorter than the row pulses.

The pulses of Figure 8 set the state of the display to that depicted in Figure 7 as follows. For the first line time for Row 1, Column 1, a column potential of-5 volts is applied along with the +5 volt row pulse to set the state of the modulators of each of the subrows in the actuated position as illustrated along the bottom of Figure 8. The Column 1 potential remains at-5 for the remaining Row 1 lines times to maintain each of the elements in the subrows in the actuated position. In Column 2, a potential of +5 volts is applied in conjunction with the row pulse in the first line time to release all modulators in the subrows in Column 2. During the second line time for Row 1, a Column 2 potential of -5 volts is applied in conjunction with the row pulse so as to actuate the bottom two subrows of Row 1. The duration of the row pulses in the second line time is shorter than the response times of the top subrow, so the states of the modulator in the top subrow is maintained. During the third row time for Row 1, a Column 2 potential is applied at-5 volts in conjunction with the row pulse to actuate the modulator in the bottom subrow. Again, the row pulse duration of the third row time is shorter than the response time of the modulators in all but the bottom subrow so that only the bottom row changes state. The set of pulses for Column 3 is applied according to Figure 8 to set the state of the subrows of Column 3.

In the illustrated embodiment, each of these line times for a row is approximately the same. However, it is to be recognized that in other embodiments, the line times may be shorter, for example, the line times for a row may shortened to correspond to the shorter row pulse durations of each of the line times of a row. Further, any other suitable drive voltage scheme may be used in place of the exemplary scheme depicted in Figures 5B and 7. Further, while the subrows in the illustrated embodiment include varying resistances that vary the RC time of the subrows, in other embodiments, the subrows may have varying capacitances, resistances, or a combination thereof.

In some embodiments, the response time of the interferometric modulators varies based on a damping force on the movable mirror caused by the movement of the movable mirror against the air in the small cavity as it forces air (or another gas) out of the cavity between movable mirror and the fixed mirror. This damping force acts as a resistance to moving the movable mirror through air. In one embodiment, this force is varied by forming holes in the movable mirror to reduce the air pressure against the movable mirror as it actuates and thus changes the electromechanical response of the actuator. In another embodiment, the holes are formed in the deformable film 34 of 6C. Other similar embodiments of interferometric modulators with varying response times are discussed in U.S. Patent Application No. 10/794,737, filed March 3, 2004. In one embodiment, the response time of interferometric modulators of the subrows varies based on variation of a combination of one or more of the RC characteristic, the spring constant, or the air damping force.

In other embodiments, other mechanical properties of the interferometric modulators may be varied so as to vary the mechanical response times of the interferometric modulators between subrows. The response time is dependent on several factors that may be varied, including the thickness, mass, or material of the movable mirror 14 or the deformable layer 34 of Figure 6C. In some embodiments, interferometric modulators in each of the subrows may have different spring constants. Embodiments may also vary the response times by varying the thicknesses, positions, or composition of the supports.

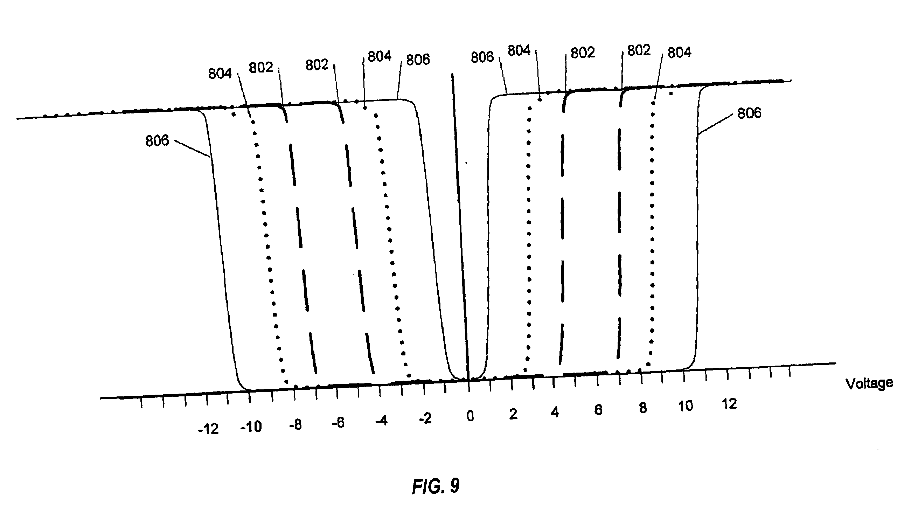

Rather than having varying response times, in other embodiments, the interferometric modulators of each of the subrows may have varying actuation and release voltages so as to enable a set of electrically connected subrows to be individually addressed. Figure 9 is a diagram, similar to that of Figure 3, of movable mirror position versus applied positive voltage illustrating an exemplary embodiment of three interferometric modulators that have respective nested stability windows. The innermost nested hysteresis window, indicated by the traces 802, has an actuation and release voltages having a magnitudes of 8 and 4 volts, respectively. The next nested hysteresis window, indicated by the traces 804, has an actuation and release voltages having a magnitudes of 10 and 2 volts, respectively. The outermost hysteresis window, indicated by the traces 804, has an actuation and release voltages having a magnitudes of 12 and 0 volts, respectively.

The hysteresis window of the modulators associated with each subrow may be selected by varying the geometry and materials of the modulators. In particular, the width (difference between the actuation and release voltages), the location (the absolute values of the actuation and release voltages), and the relative values of the actuation and release voltages may be selected by varying geometric and material properties of the modulators. The varied properties may include, for example, the distance between movable mirror supports, the mass associated with the movable mirror relative to the spring constant, the thickness, tensile stress, or stiffness of the mirror and/or the layers or mechanism that moves the mirror, the dialectic constant or thickness of a dielectric layer between the stationary electrode and the movable electrode. More details of the selection of the hysteresis properties of the interferometric modulators are disclosed in U.S. Provisional Patent No. 60/613,382, entitled "METHOD AND DEVICE FOR SELECTIVE ADJUSTMENT OF HYSTERESIS WINDOW," filed on September 27, 2004.

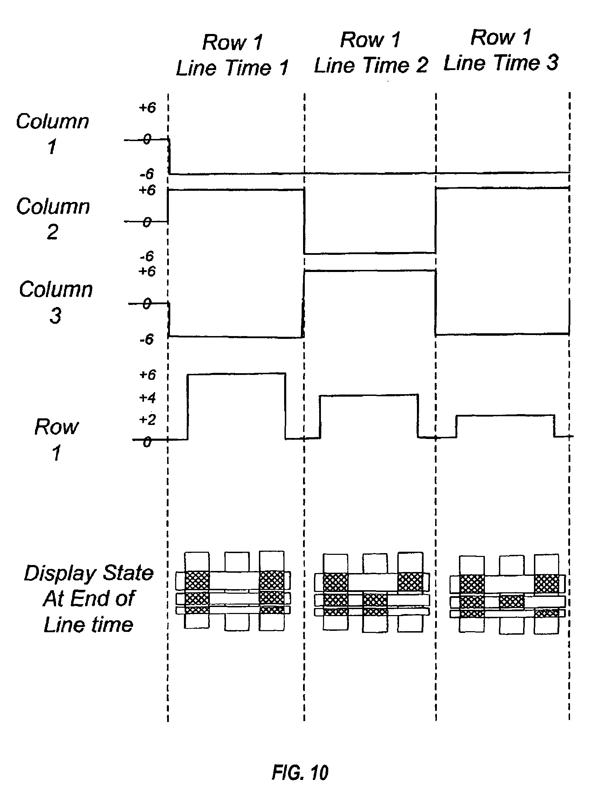

In one such embodiment, the interferometric modulators are arranged in subrows as in Figure 8. The modulators of each of the subrows have hysteresis stability windows that are nested within each other. In the illustrated embodiment, the stability windows are nested from outer to inner, such as the windows depicted Figure 9, from the top subrow to the bottom subrow. Figure 10 is a timing diagram that illustrates a series of row and column signals applied to the first row (Row 1) of such an embodiment of an array to produce the illustrated display arrangement. The row and column signals in one embodiment are similar to those depicted in Figure 8, except that the row pulses vary in magnitude rather than duration. The row pulses decrease in magnitude from left to right, corresponding to the subrows from top to bottom. This decreasing magnitude of the pulses is selected to address only those modulators in subrows that have smaller actuation/greater release voltages. For example, in the illustrated embodiment, potentials of +6 and -6 volts are applied to the columns and row pulses of 2, 4, 6 volts are applied to the rows.

The pulses of Figure 8 set the state of the display to that depicted in Figure 7 as follows. For the first line time for Row 1, Column 1, a column potential of -6 volts is applied along with the +6 volt row pulse to set the state of the modulators of each of the subrows in the actuated position as illustrated along the bottom of Figure 8. The Column 1 potential remains at-6 for the remaining Row 1 line times to continue to set the state of each of the elements in the subrows in the actuated position. In Column 2, a potential of +6 volts is applied in conjunction with the row pulse at +6 volts in the first line time to release all modulators in the subrows in Column 2. During the second line time for Row 1, a Column 2 potential of-6 volts is applied in conjunction with a row pulse of +4 volts so as to actuate the bottom two subrows of Row 1. During the third row time for Row 1, a Column 2 potential is applied at-6 volts in conjunction with the row pulse of +2 volts to actuate the modulator in the bottom subrow. The set of pulses for Column 3 is applied according to Figure 8 to set the state of the subrows of Column 3.

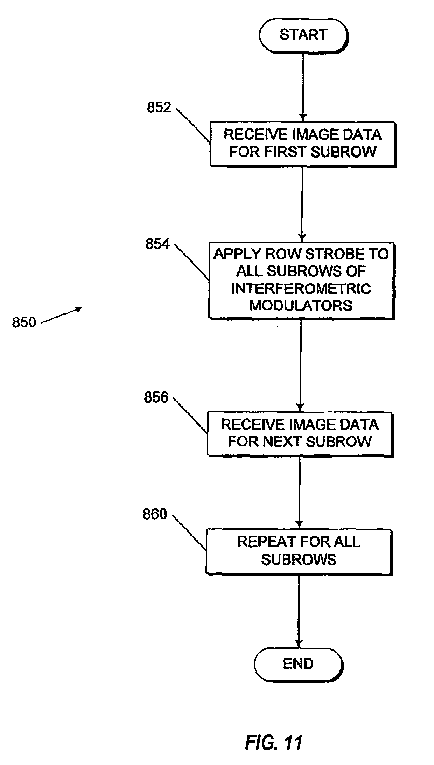

Figure 11 is a flowchart illustrating one embodiment of a method 850 of updating an embodiment of a display such as in Figures 6 and 9. The method 850 begins at a block 852 in which the driver 22 of Figure 2 receives image data value for a subrow. In one embodiment, the driver 22 receives the data value from a frame buffer. Next at a block 854, the driver 22 applies a row strobe to all subrows of interferometric modulators along with a column potential that corresponds to the image data value. Moving to block 856, the driver 22 receives the data for the next subrow. Next at block 860, the acts of blocks 854 and 856 are repeated for each of the subrows. In one embodiment, the acts of the blocks 854 and 856 occur at least partially concurrently.

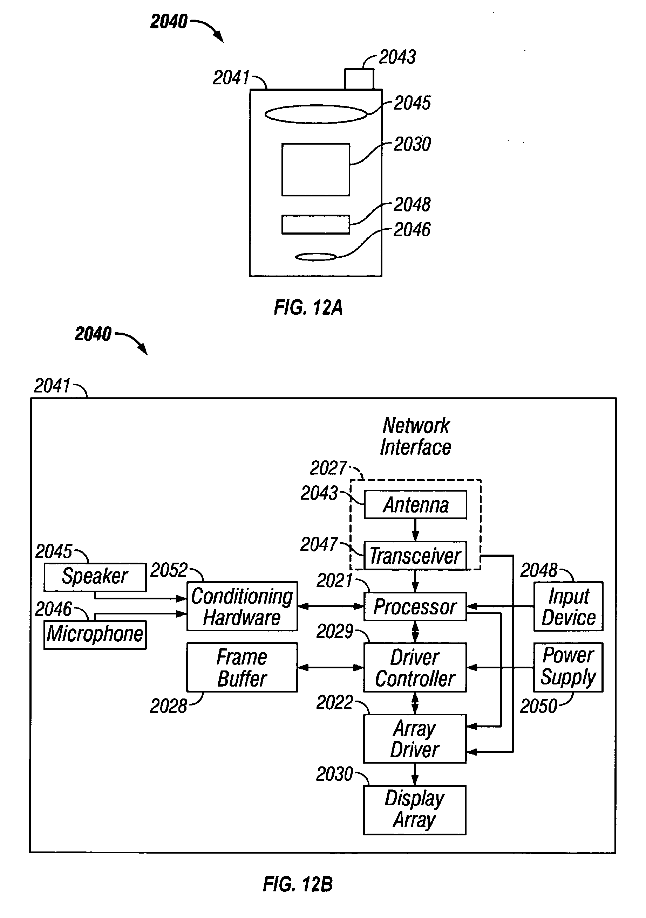

Figures 12A and 12B are system block diagrams illustrating an embodiment of a display device 2040. The display device 2040 can be, for example, a cellular or mobile telephone. However, the same components of display device 2040 or slight variations thereof are also illustrative of various types of display devices such as televisions and portable media players.

The display device 2040 includes a housing 2041, a display 2030, an antenna 2043, a speaker 2045, an input device 2048, and a microphone 2046. The housing 2041 is generally formed from any of a variety of manufacturing processes as are well known to those of skill in the art, including injection molding, and vacuum forming. In addition, the housing 2041 may be made from any of a variety of materials, including but not limited to plastic, metal, glass, rubber, and ceramic, or a combination thereof. In one embodiment the housing 2041 includes removable portions (not shown) that may be interchanged with other removable portions of different color, or containing different logos, pictures, or symbols.

The display 2030 of exemplary display device 2040 may be any of a variety of displays, including a bi-stable display, as described herein. In other embodiments, the display 2030 includes a flat-panel display, such as plasma, EL, OLED, STN LCD, or TFT LCD as described above, or a non-flat-panel display, such as a CRT or other tube device, as is well known to those of skill in the art. However, for purposes of describing the present embodiment, the display 2030 includes an interferometric modulator display, as described herein.

The components of one embodiment of exemplary display device 2040 are schematically illustrated in Figure 12B. The illustrated exemplary display device 2040 includes a housing 2041 and can include additional components at least partially enclosed therein. For example, in one embodiment, the exemplary display device 2040 includes a network interface 2027 that includes an antenna 2043 which is coupled to a transceiver 2047. The transceiver 2047 is connected to the processor 2021, which is connected to conditioning hardware 2052. The conditioning hardware 2052 may be configured to condition a signal (e.g. filter a signal). The conditioning hardware 2052 is connected to a speaker 2045 and a microphone 2046. The processor 2021 is also connected to an input device 2048 and a driver controller 2029. The driver controller 2029 is coupled to a frame buffer 2028 and to the array driver 2022, which in turn is coupled to a display array 2030. A power supply 2050 provides power to all components as required by the particular exemplary display device 2040 design.

The network interface 2027 includes the antenna 2043 and the transceiver 2047 so that the exemplary display device 2040 can communicate with one or more devices over a network. In one embodiment the network interface 2027 may also have some processing capabilities to relieve requirements of the processor 2021. The antenna 2043 is any antenna known to those of skill in the art for transmitting and receiving signals. In one embodiment, the antenna transmits and receives RF signals according to the IEEE 802.11 standard, including IEEE 802.11(a), (b), or (g). In another embodiment, the antenna transmits and receives RF signals according to the BLUETOOTH standard. In the case of a cellular telephone, the antenna is designed to receive CDMA, GSM, AMPS or other known signals that are used to communicate within a wireless cell phone network. The transceiver 2047 pre-processes the signals received from the antenna 2043 so that they may be received by and further manipulated by the processor 2021. The transceiver 2047 also processes signals received from the processor 2021 so that they may be transmitted from the exemplary display device 2040 via the antenna 2043.

In an alternative embodiment, the transceiver 2047 can be replaced by a receiver. In yet another alternative embodiment, network interface 2027 can be replaced by an image source, which can store or generate image data to be sent to the processor 2021. For example, the image source can be a digital video disc (DVD) or a hard-disc drive that contains image data, or a software module that generates image data.

Processor 2021 generally controls the overall operation of the exemplary display device 2040. The processor 2021 receives data, such as compressed image data from the network interface 2027 or an image source, and processes the data into raw image data or into a format that is readily processed into raw image data. The processor 2021 then sends the processed data to the driver controller 2029 or to frame buffer 2028 for storage. Raw data typically refers to the information that identifies the image characteristics at each location within an image. For example, such image characteristics can include color, saturation, and gray-scale level.

In one embodiment, the processor 2021 includes a microcontroller, CPU, or logic unit to control operation of the exemplary display device 2040. Conditioning hardware 2052 generally includes amplifiers and filters for transmitting signals to the speaker 2045, and for receiving signals from the microphone 2046. Conditioning hardware 2052 may be discrete components within the exemplary display device 2040, or may be incorporated within the processor 2021 or other components.

The driver controller 2029 takes the raw image data generated by the processor 2021 either directly from the processor 2021 or from the frame buffer 2028 and reformats the raw image data appropriately for high speed transmission to the array driver 2022. Specifically, the driver controller 2029 reformats the raw image data into a data flow having a raster-like format, such that it has a time order suitable for scanning across the display array 2030. Then the driver controller 2029 sends the formatted information to the array driver 2022. Although a driver controller 2029, such as a LCD controller, is often associated with the system processor 2021 as a stand-alone Integrated Circuit (IC), such controllers may be implemented in many ways. They may be embedded in the processor 2021 as hardware, embedded in the processor 2021 as software, or fully integrated in hardware with the array driver 2022.

Typically, the array driver 2022 receives the formatted information from the driver controller 2029 and reformats the video data into a parallel set of waveforms that are applied many times per second to the hundreds and sometimes thousands of leads coming from the display's x-y matrix of pixels.

In one embodiment, the driver controller 2029, array driver 2022, and display array 2030 are appropriate for any of the types of displays described herein. For example, in one embodiment, driver controller 2029 is a conventional display controller or a bi-stable display controller (e.g., an interferometric modulator controller). In another embodiment, array driver 2022 is a conventional driver or a bi-stable display driver (e.g., an interferometric modulator display). In one embodiment, a driver controller 2029 is integrated with the array driver 2022. Such an embodiment is common in highly integrated systems such as cellular phones, watches, and other small area displays. In yet another embodiment, display array 2030 is a typical display array or a bi-stable display array (e.g., a display including an array of interferometric modulators).

The input device 2048 allows a user to control the operation of the exemplary display device 2040. In one embodiment, input device 2048 includes a keypad, such as a QWERTY keyboard or a telephone keypad, a button, a switch, a touch-sensitive screen, a pressure- or heat-sensitive membrane. In one embodiment, the microphone 2046 is an input device for the exemplary display device 2040. When the microphone 2046 is used to input data to the device, voice commands may be provided by a user for controlling operations of the exemplary display device 2040.

Power supply 2050 can include a variety of energy storage devices as are well known in the art. For example, in one embodiment, power supply 2050 is a rechargeable battery, such as a nickel-cadmium battery or a lithium ion battery. In another embodiment, power supply 2050 is a renewable energy source, a capacitor, or a solar cell, including a plastic solar cell, and solar-cell paint. In another embodiment, power supply 2050 is configured to receive power from a wall outlet.

In some implementations control programmability resides, as described above, in a driver controller which can be located in several places in the electronic display system. In some cases control programmability resides in the array driver 2022. Those of skill in the art will recognize that the above-described optimization may be implemented in any number of hardware and/or software components and in various configurations.

It is to be recognized that while certain embodiments disclosed herein are discussed with respect to "rows" and "columns," these terms are used for convenience only in describing these embodiments. In other embodiments, the properties attributed to rows or columns in the exemplary embodiments may be completely or partially reversed as would be apparent to one of skill in the art. Further, while embodiments are illustrated in Figures 7 and 9B with respect to one particular drive scheme, any other suitable drive scheme may be adapted to vary the duration or magnitude of the applied pulses in accordance with the disclosed invention. In addition, while in one embodiment, the groups of interferometric modulators that share a common driver connection are arranged in subrows, it is to be recognized that other embodiments may include any arrangement of groups of interferometric modulators.

Moreover, while certain embodiments have been discussed with respect to electrically connected groups of interferometric modulators with different response times, and certain other embodiments discussed with respect to electrically connected groups of interferometric modulators with different hysteresis stability windows, other embodiments may include groups of electrically connected modulators that have different response times and different hysteresis stability windows. Such embodiments may be addressed using a series of pulses that vary in both duration and voltage.

While the above detailed description has shown, described, and pointed out novel features of the invention as applied to various embodiments, it will be understood that various omissions, substitutions, and changes in the form and details of the device or process illustrated may be made by those skilled in the art without departing from the spirit of the invention. The scope of the invention is indicated by the appended claims rather than by the foregoing description. All changes which come within the meaning and range of equivalency of the claims are to be embraced within their scope.

## Claims

1. A device comprising:
a plurality of means for modulating light, the modulating means having differing values of deflection for a selected applied voltage; and
addressing means for providing addressing pulses of varying voltage level to the plurality of elements such that different combinations of the modulating means switch in a selectable manner, depending upon the voltage level of the addressing pulses,
wherein said addressing means is configured to provide a first pulse to which all modulating means of said plurality of elements are responsive and at least a second pulse to which less than all of said modulating means are responsive.

2. The device of Claim 2, wherein at least one of said modulating means comprise an interferometric modulator.

3. The device of Claims 1 or 2, wherein said addressing means comprise a driver circuit.

4. The device of Claim 1, additionally comprising:
a processor that is in electrical communication with said modulating means, said processor being configured to process image data; and
a memory device in electrical communication with said processor.

5. The device of Claim 4, additionally comprising a controller configured to send at least a portion of said image data to said driver circuit.

6. The device of claim 4, additionally comprising an image source module configured to send said image data to said processor.

7. The device of claim 6, wherein said image source module comprises at least one of a receiver, transceiver, and transmitter.

8. The device of claim 4, further comprising an input device configured to receive input data and to communicate said input data to said processor.

9. The device of Claim 1, wherein at least some of the modulating means have differing mechanical structures with respect to each other to effect differing values of deflection versus applied voltage.

10. The device of Claim 9, wherein at least some of the modulating means have differing film thicknesses with respect to each other to effect differing values of deflection versus applied voltage.

11. The device of Claim 10, wherein the differing film thicknesses comprise differing thicknesses of an insulator layer between a deflecting and non-deflecting electrode.

12. A method of addressing a plurality of display elements having at least a first and second display element and **characterized by** respective response thresholds, the method comprising:
generating a first pulse **characterized by** a parameter having a value greater than the response threshold of all of said plurality of display elements;
applying the first pulse to the plurality of display elements;
generating a second pulse **characterized by** a parameter having a value greater than the response threshold of the first display element and less than the response threshold of the second display element; and
applying the second pulse to the plurality of display elements.

13. The method of Claim 12, wherein the parameter comprises a pulse duration and the response threshold comprises a response time of the respective display element.

14. The method of Claim 12, wherein the parameter comprises a voltage magnitude and the response threshold comprises an actuation voltage of the respective display element.

15. The method of Claim 12, wherein the state of the second element is maintained.

16. The method of Claim 12, further comprising:
receiving an image data signal; and
setting the state of each of the first and second display elements based, at least in part, on the image data signal.

17. The method of Claim 12, further comprising:
generating a third pulse of a third value of the parameter that is greater than the response threshold of a third display element, wherein the third value is less than the response threshold of the first and second display elements; and
applying the third pulse to the plurality of display elements.

18. The method of Claim 12, wherein applying the first pulse to the plurality of display elements comprises applying the first pulse to a plurality of interferometric modulators.

19. The method of Claim 12, wherein the plurality of display elements is **characterized by** respective resistor-capacitor (RC) time constants.

20. The method of Claim 19, wherein the respective response times of the plurality of display elements are based, at least in part, on the respective RC time constants, and wherein the first and second display elements are **characterized by** different RC time constants.

21. The method of Claim 20, wherein the plurality of display elements is **characterized by** respective physical properties.

22. The method of Claim 12, wherein the respective response times of the plurality of display elements are based, at least in part, on the respective spring constants, and wherein the first and second display elements are **characterized by** different spring constants.

23. The method of Claim 18, wherein each of the plurality of interferometric modulators comprises a movable mirror **characterized by** a respective resistance when moving through air.

24. The method of Claim 12, wherein the respective response times of the plurality of interferometric modulators are based, at least in part, on the respective air resistance of the movable mirror, and wherein the first and second display elements are **characterized by** different resistances to movement through air.

25. The method of Claim 12, wherein applying the first pulse to the plurality of display elements comprises applying the first pulse to a pixel of a visual display.

26. The method of Claim 25, wherein the pixel comprises the plurality of display elements.

27. The method of Claim 12, wherein applying the first pulse to the plurality of display elements comprises applying a voltage pulse.

28. The method of Claim 12, wherein applying the first pulse to the plurality of display elements comprises applying a first voltage pulse to a row of the display elements and applying a second voltage pulse to a column of the display elements, and wherein each of the first and second display elements is associated with the row and the column.

29. A display comprising:
a plurality of means for displaying arranged in rows, wherein the displaying means of each of the rows are further arranged in subrows and wherein the subrows of each row are electrically connected; and
a plurality of means for resisting electrical current, each of the resisting means connected to a respective one of the subrows, the respective one of the resisting means for each of the subrows of each row having a different resistance from the resisting means connected to the other subrows of the row.

30. The display of Claim 29, wherein at least one of the resisting means comprises a resistor.

31. The display of Claims 29 or 30, wherein at least one of the displaying means comprises an interferometric modulator.

32. The device of Claim 29, additionally comprising:
a processor that is in electrical communication with said displaying means, said processor being configured to process image data; and
a memory device in electrical communication with said processor.

33. The device of Claim 32, additionally comprising a controller configured to send at least a portion of said image data to said driver circuit.

34. The device of claim 32, additionally comprising an image source module configured to send said image data to said processor.

35. The device of claim 34, wherein said image source module comprises at least one of a receiver, transceiver, and transmitter.

36. The device of claim 32, further comprising an input device configured to receive input data and to communicate said input data to said processor.

37. A method of manufacturing a display comprising:
providing a plurality of MEMS elements arranged in rows, wherein the MEMS elements of each of the rows are further arranged in subrows and wherein the subrows of each row are electrically connected; and
connecting a plurality of resistors to the MEMS elements, each of the resistors connected to a respective one of the subrows, the respective one of the resistors for each of the subrows of each row having a different resistance from the resistors connected to the other subrows of the row.
